# EUROPEAN PATENT SPECIFICATION

(11) **EP 0 326 175 B1**
(45) Date of publication and mention of the grant of the patent: **29.03.1995**
(21) Application number: 89101507.5
(22) Date of filing: 28.01.1989
(51) Int. Cl.: B29C 45/12

(54) **Sequential injection molding machine**
Sequentielle Spritzgiessmaschine
Machine à mouler par injection séquentielle

(30) Priority: 29.01.1988 US 150157; 06.01.1989 US 294308
(43) Date of publication of application: 02.08.1989
(60) Divisional application: 93118130.9
(73) Proprietor: HUSKY INJECTION MOLDING SYSTEMS LTD., CA-Bolton, Ontario L0P 1A0 (CA)
(72) Inventor: Schad, Robert D., Toronto Ontario (CA); Brown, Paul B., Orangeville Ontario L9W 2Y9 (CA)
(74) Representative: Weiss, Peter, Dr. rer.nat.

(56) References cited:
- EP-A- 0 103 363
- WO-A-89/00103
- DE-A- 3 544 155
- FR-A- 1 432 150
- FR-A- 2 297 719
- US-A- 3 417 433
- US-A- 3 898 030
- US-A- 3 973 892
- US-A- 4 400 341

## Description

### BACKGROUND OF THE INVENTION

The present invention relates to an injection molding machines according to the first part of claim 1 and to a process according to the preamble of claim 15 and relates, in particular, to such machines having the capability of operating a plurality of molds arranged in series.

The prior art shows injection molding machines having the capability of operating a plurality of molds arranged in series. For example, US-A 3 707 342 shows two molds spaced apart in tandem with a dual nozzle injection unit positioned therebetween to fill the two molds alternately. No provision is made for separate means to stuff the molds.

An additional prior art patent pertinent to the present invention is US-A 3 898 030. In this disclosure, latches are used to couple separable mold halves whereby single clampling and ejection units are used for both molds.

A further prior art patent is US Patent No. Re 28 721. This patent discloses a primary reciprocating-screw injection unit and an auxilary injection piston with a valve for diverting molten plastic flow from the primary unit to the secondary unit thereby isolating the primary unit and permitting the secondary unit to "stuff " mold.

Other pertinent machine patents include WO 86/01146 and DE-C 34 28 780. In addition, the prior art shows stack and sandwich mold arrangements wherein the mold cavity plates are disposed back to back separated by an integral hot runner. Representative of stack mold arrangements are US-A 3 723 040, 3 974 892 and 4 400 341. Stack or sandwich mold arrangements are well known in the art; however, their draw backs include a less than optimum operating cycle and lack of versatility in components.

Additional publications of interest are US-A 4 725 207 which shows a goose neck connection between a plastic injection unit and a distributor carried by a movable platen.

Moreover, there is a disadvantage in combining a hot runner with mold elements as a single piece part. Such an arrangement necessitates replacement of a complete multiple element mold and hot runner as a unit when one wishes to change molds. Whereas when the mold elements are separable from the hot runner system, it is merely necessary to remove mold elements while the hot runner remains a machine fixture.

US-A 4 539 171 is also of interest. In this patent, thermoplastic material is transferred from an injection unit to a sandwich mold by means of a so-called snorkle and a cooperating nozzle. The snorkle and nozzle make a connection to provide a conduit for thermoplastic material. The snorkle and nozzle move relative to another along a common axis which is parallel to and spaced from central axis along which clamping platens reciprocate.

The FR-A 1 432 150 shows primary and secondary injection means. The primary injection means injects the molten material into a mold. After removing the primary injection means the second injection means is moved before the gate of the mold. Then a rod of a piston pushes the material in the channel behind the gate into the mold delivering additional material. Furthermore the changement of the primary injeciton means to the secondary injection means needs time during which the material in the channel behind the gate could frozen so that the pressure of the secondary injection means has no effect.

A similar arrangement is shown in the WO-A 89/00103, upon which the preambles of claims 1 and 15 are based. There is shown a center molding block and a left molding block join at a first parting surface and define a left molding cavity. The center molding block an the right molding block join at a second parting surface and define a right molding cavity. An injection system and the center molding block define an adjustable feed system, which may have a molten core. Within the center molding block, the feet system includes a runner stem which is connected to a left branch and a right branch. The left branch terminates in a gate to the left molding cavity; and the right branch terminates in a gate to the right molding cavity. Furthermore a piston system including a packing element is connected to the feed system for controlling the hold pressure in the left and right branches.

One disadvantage of this invention is that the hot runner system for the manifold is part of the mold. This arrangement offers no chance changing the molds without disturbing the runner system. If you wish to change the mold configuration you have to sacrifice the entire block. Furthermore the piston system is arranged for holding the pressure within the branches. But it is not able to deliver additional material.

### SUMMARY OF THE INVENTION

In contrast to the above prior art disclosures, the present invention relates to an injection molding machine according to the second part of claim 1 having a plurality of molding stations with a plurality of machine accessories arranged in various combinations developing a sequence of operations calculated to reduce molding cycle time per part particularly when molding large parts, such as large containers or autobody parts.

It is a primary feature of the present invention to provide an injection molding machine which enables the mold assemblies to be operable independently of each other and to be readily separable from the machine.

A further feature of the invention is the provision of a plurality of mold stations arranged in series and separated by a discrete, central, movable machine platen.

A further feature of the invention is the provision of structure for transferring molding compound from an injection unit to a manifold distributor block along a path which is perpendicular to the clamping axis or the longitudinal machine axis.

A still further feature of the invention is the provision of seal means for sealing the injection unit nozzle to the distributor block orifice along an axis which is perpendicular to the clamping axis.

A further feature of the invention is the incorporation in the central movable platen of a distributor communicating with whatever mold halves may be attached to said central platen.

It is a further feature of the invention to provide a primary clamping system operable to clamp all mold stations simultaneously. A single primary clamp means cooperating with and making a series connection with a plurality of secondary clamp means is operable in response to a clamp control unit to open and close molds at a plurality of tandemly arranged mold stations in accord with various permutations and combinations.

A further feature of the invention is the provision of a check valve in the distributor block to prevent leakage of resin when the injection unit nozzle is not in sealing contact with the distributor block orifice.

A further feature of the invention is the provision of a central movable platen with individual manifold sections on opposite sides of the platen operable to feed moldable resin to mold halves carried by the central platen under the control of valve means positioned upstream of said central platen. The central movable platen may be cored for cooling and the manifold sections isolated from the platen by an insulating air gap.

A further feature of the invention is the provision of valve means in the manifold distributor block operable to place the injection unit and/or a packing unit in communication with the individual manifolds, selectively.

A further feature of the invention is the provision of power means for effecting and maintaining the seal between the manifold distributor block and said injection unit nozzle where the power means operates along a path which is perpendicular to the mold clamping axis.

A further feature of the invention is the provision of a plurality of mold stations arranged in series and separated by a discrete, central, movable machine platen.

It is a further feature of the invention to provide an independent secondary clamping system operable to clamp platens of a given mold station directly and selectively or, in the alternative, operable to clamp mold halves of said given station directly and selectively.

It is a further feature of the invention to mount secondary clamps directly upon the mold platens.

It is a still further feature of the invention to feed molten plastic into a plurality of individual mold cavities at different, serially arranged mold stations utilizing a single primary injection means and one or more secondary injection means to fill and pack (stuff) each said mold cavity in sequence thereby increasing overall productivity of individual molds.

It is a further feature of the present invention to use the primary injection means dually as a mold cavity "filler" and a mold cavity "stuffer".

It is a further feature of the present invention to provide a novel sequencing system for utilizing primary and secondary injection means to inject molten plastic into a plurality of mold stations clamped by a single, primary clamping means, where the primary injection means performs both, a mold filling and stuffing function at one station.

A further feature of this novel molding sequence is that a part molded at a station A, for example, which is serviced by a primary and a secondary injection means may be of entirely different size and structural complexity than another part molded at a station B. In accordance with this feature, filling and stuffing of the mold at station B may be accomplished sequentially by a single injection means.

A still further feature of the invention is that two parts requiring generally equal cooling periods may be molded at two tandemly arranged stations using a single primary clamp means. The single primary clamp means acting upon two stations in the same time interval that would be required if the parts were molded successively at the two mold stations utilizing primary and secondary clamp means.

A further feature of the invention is the provision of an injection molding machine in which one or more primary injection means are mounted on a fixed or movable platen with track means facilitating motion of the units, to and fro, along the longitudinal axis (x axis) of the machine.

A still further feature of this invention is the incorporation, into a multi-station injection molding machine, of a parts removal device or robot which is operable to remove parts molded in reverse or in identical orientation at each station.

A further feature of the invention is the provision of a secondary injection means mounted on a movable platen whose design lends itself to a wide variety of mounting locations on said movable platen, i.e. top, side or bottom of said movable platen.

A further feature of the invention is the provision of an injection molding machine on a single frame means comprising at least two injection means and at least four mold stations arranged in series.

An injection molding machine embracing features of the present invention includes, in one combination or another, a main frame, fixed and movable platens to support mold halves and primary and secondary clamp means. The secondary clamp means are usually attached to the mold platens; however, if necessary they may also be mounted directly on mold halves that are attached to the platens.

A distributing manifold is incorporated in a central movable platen including valve means for directing molten plastic to opposed mold station. The manifold includes a connection to a primary injection means and to a secondary injection means with appropriate valve means for controlling flow from the primary injection means.

In an alternative embodiment of the machine, the primary injection means is programmed to melt sufficient plastic to fill two molds. A first mold is then filled by the primary injection means and stuffed by a secondary injection means. Next, molten plastic flow is directed to a second mold station where the filling of the mold as well as the stuffing step is performed solely by the primary injection means. In this embodiment the clamping function may be solely by the primary clamp means or by the primary clamp means in combination with secondary clamps, depending upon size, configuration and relative cooling rates of the respective molded parts.

Further, the machine includes ejection means and a parts remover (robot) which operates on rectilinear coordinates to move from molding station to molding station along a first axis and into and out of an open mold along a second axis.

Product may be molded in the same or in reverse orientation with appropriate modification of the parts remover and the flow path of the molten plastic.

In reverse orientation, the remover head carries dual "pick up" elements, while product molded in same orientation is grasped by a remover head with a single pick up.

In certain situations, the size and complexity of the molded parts require the use of a plurality of primary injection means adapted to cooperate with a plurality of secondary injection means to insure complete filling and stuffing the corresponding mold cavity in a given mold station.

A further embodiment of the machine takes the form of a double capacity unit. In this arrangement, there are four molding stations, two primary injection means and two central platens, each incorporating a distributor.

Other features and advantages of the present invention will become more apparent from an examination of the succeeding specification when read in conjunction with the appended drawings, in which:

### BRIEF DESCRIPTION OF THE DRAWINGS

Fig. 1 shows a side view of a typical lay out of the sequential molding machine of the present invention with the distributor block broken away for clarity;
Fig. 2 is a view similar to Fig. 1 showing the opposite molding station open with the molded part poised for removal;
Fig. 3 is an additional side view showing both mold stations in the closed condition with primary and secondary clamp means in operation;
Fig. 4 is a side of the machine with the molded parts remover or robot in an open mold retrieving a part;
Fig. 5 is a top plan view of the illustration of Fig. 4;
Fig. 6 is similar to Fig. 5 showing the robot in the opposite molding station;
Fig. 7 is a plot of the machine sequence of operation charting the position of the various machine accessories against the step by step generation of the molded parts;
Figs. 8, 9 and 10 show an alternative arrangement of primary and secondary injection means serving two molding stations;
Fig. 11 is a plan view of an injection molding machine with an alternative secondary or parting line clamp structure;
Fig. 12 is a schematic illustration of details of the structure and mounting means of the alternative secondary clamp of Fig. 11;
Fig. 13 is a plan view of a machine modification in which a plurality of primary injection means are utilized in combination with a plurality of distributor blocks and corresponding secondary injection means;
Fig. 14 is a side view of an additional machine modification showing double sets of primary and secondary injection means and robots servicing four mold stations;
Fig. 15 is a chart detailing the operating sequence of the machine of Fig. 14;

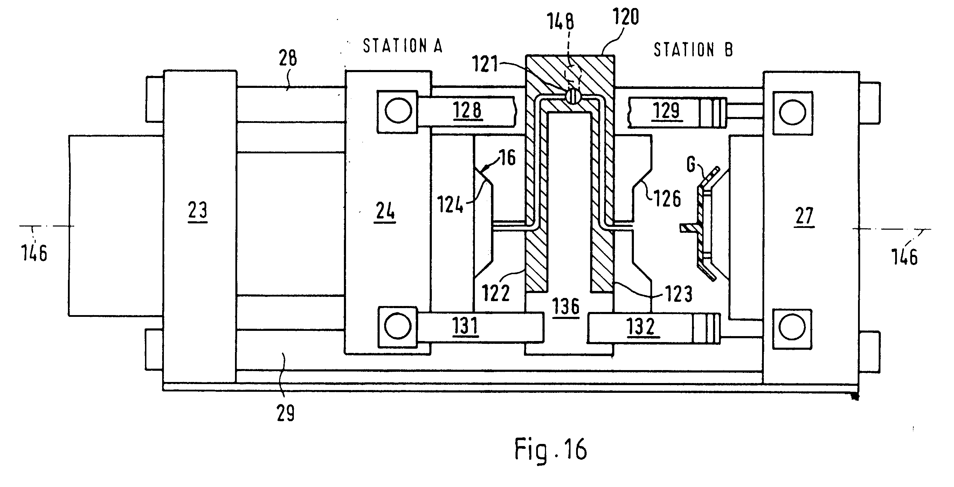

Fig. 16 is a plan view of a modified molding machine with portions broken away to illustrate an alternative manifold structure;
Fig. 17 is a plan view of a portion of Fig. 16, enlarged, showing the hot runner system, the injection unit (extruder), the injection unit nozzle clamp means and mold halves;
Fig. 18 is a view similar to Fig. 17 showing the injection unit in position to supply moldable material to the hot runner system with the injection unit nozzle clamped to the hot runner system;
Fig. 19 is an elevational view of the right side of Fig. 18 showing the valve means for switching molding material to manifold sections, the nozzle clamping means and a packing cylinder or stuffer; and,
Fig. 20 is a sectional view, enlarged, as viewed in the plane of the line 5-5 of Fig. 17 and in the direction of the arrows, showing the seal between the nozzle and the manifold distributor block and showing the valve means.

### DETAILED DESCRIPTION OF THE PREFERRED EMBODIMENTS

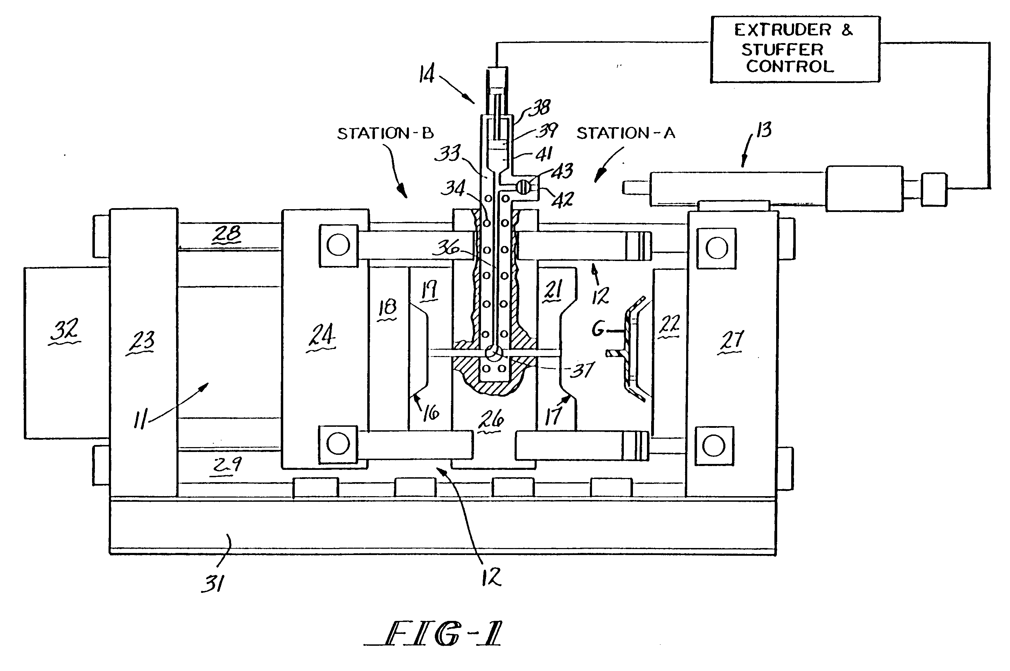

Referring to Figs. 1, 2 and 3, a basic embodiment of the injection molding machine of the present invention is disclosed comprising molding stations A and B having essential accessories defining a primary clamp section 11, a secondary clamp section 12, a primary molten plastic injection section 13 and a secondary injection section 14. Either the primary and/or secondary injection unit may be of the reciprocating screw type or piston type.

Molds 16 and 17, frequently of different configurations, comprise mold halves 18 and 19 and 21 and 22, respectively.

Mold halves 19 and 21 are mounted on central movable platen 26 and halves 18 and 22 are mounted on movable platen 24 and fixed platen 27, respectively.

Platens 23 and 27, fixed to the machine frame 31, support tie bars 28 and 29 in the usual and customary fashion.

Platen 24 is connected to primary clamping piston 32 and is reciprocated thereby sliding on tie bars 28 and 29.

Central platen 26 is also movable on tie bars 28 and 29 and is releasably connected to movable platen 24 and fixed platen 27 by secondary clamping means 12 in a manner which will be explained in greater detail as this specification proceeds.

Machine section 14 includes a distribution block 33 incorporated in platen 26, with heating elements 34, molten plastic supply channel 36 and selector valve 37 for diverting compound flow from station A to station B and vice versa.

The distributor block 33 terminates in a cylinder 38 having a piston 39 and a reservoir 41.

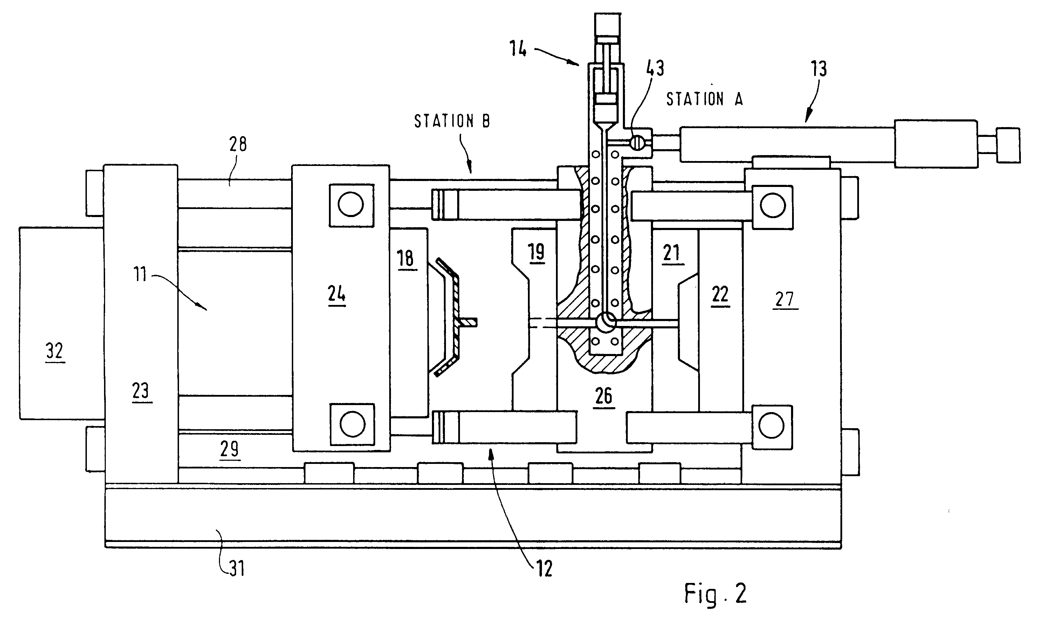

A second channel 42, adapted to make a connection with a reciprocating primary injection section 13, as is most apparent in Fig. 2, includes a shut off valve 43 for cutting off molten plastic flow from the primary injection means.

With the piston 39 in the retracted position, as shown in Fig. 1, the molten plastic advanced by the injection section 13 operates to fill the mold cavity to which selector valve 37 is set (station B in Fig. 1) and simultaneously fills reservoir or accumulator 41. Upon closure of shut off valve 43, isolating the injection section 13, actuation of the piston 39 is operable to "stuff" the mold cavity to which molten plastic was initially directed.

Obviously the reservoir can be reestablished and recharged upon retraction of the piston 39 in preparation to charge the opposite mold cavity.

Typically, the injection section 13 includes a plasticizing-injection unit referred to in the art as a reciprocating-screw extruder.

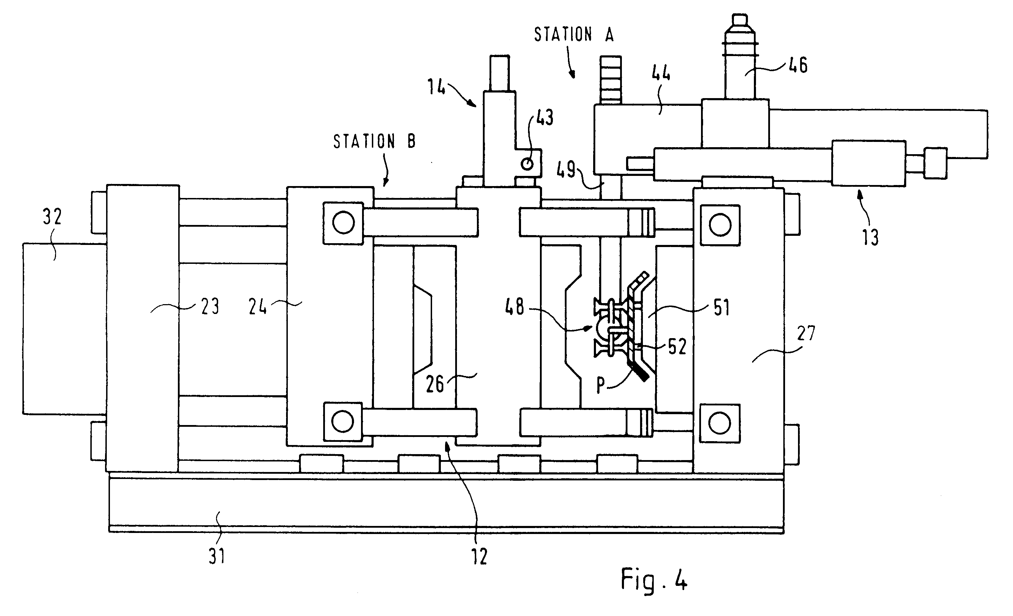

Figs. 4, 5 and 6 are similar to Figs. 1, 2 and 3 and show details of one embodiment of the secondary clamp means and the structure and operation of the molded parts removal unit or robot.

Referring to Fig. 4, the parts removal unit operates automatically in timed sequence, in robot fashion, and includes a first leg 44 which reciprocates under control of power unit 46 along the longitudinal axis (x axis) of the machine guided by a track (not shown). The power unit 46 is supported by fixed platen 27.

When the part removal head 48 is in register with an open mold, such as the open mold at station A in Fig. 4, a second leg 49 is actuated by suitable power means to advance the head along a second axis (z axis) into register with finished part P. The part is then ejected from core 51 by ejector pins 52, in well known fashion, and picked up by the head.

The head 48 is provided with a source of vacuum and a valve operable to direct vacuum to the part side of the head where upon the part P is grasped and drawn away from the core by the head. The head is retracted automatically and the part P released to an appropriate container (not shown) for packaging or further processing, as the case may be.

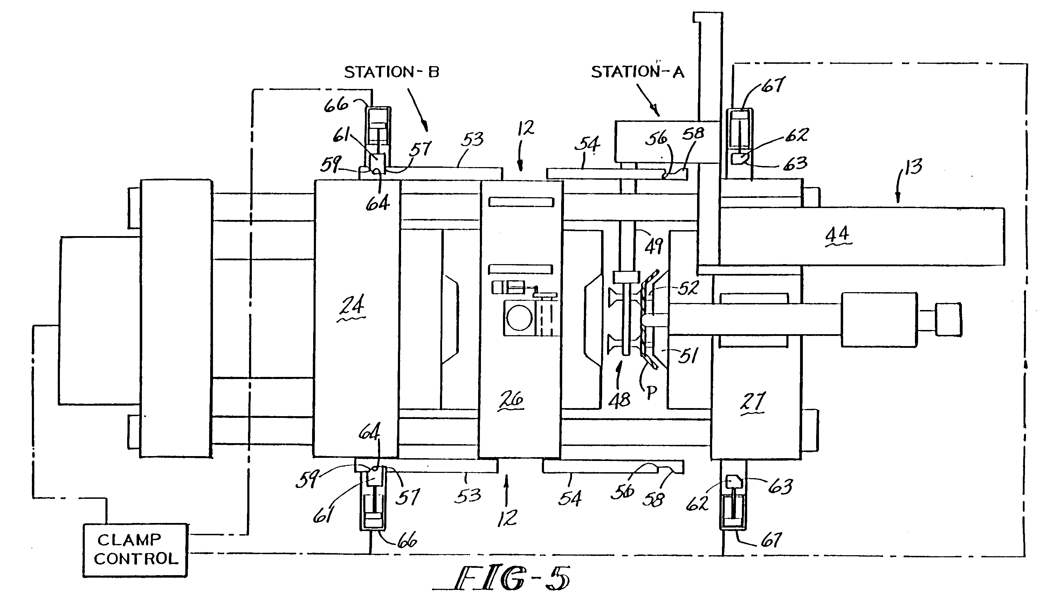

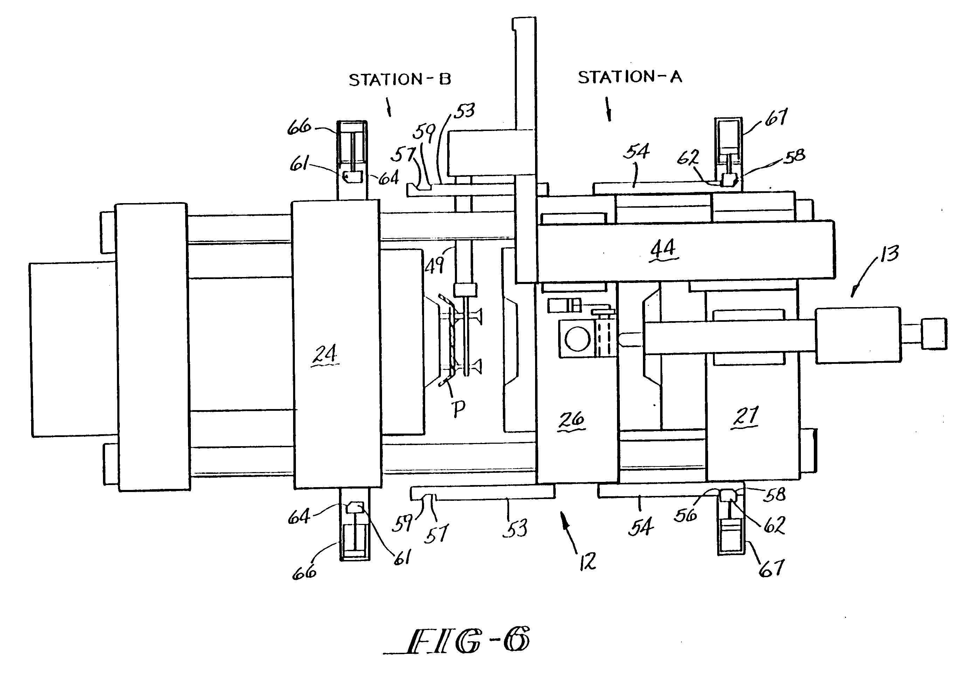

Figs. 5 and 6 are top plan views of the illustration of Fig. 4 and show details and operation of one embodiment of the secondary clamp section indicated generally by the reference numeral 12.

Pairs of opposed arms 53 and 54, fixed to central platen 26, are formed with notches 56 and 57 and cam faces 58 and 59. The notches are engaged by dogs or lugs 61 and 62 having mating cam faces 63 and 64. The lugs 61 and 62, operable to reciprocate in timed sequence under the control of piston-cylinder assemblies 66 and 67, are mounted on the movable platen 24 and fixed platen 27, respectively.

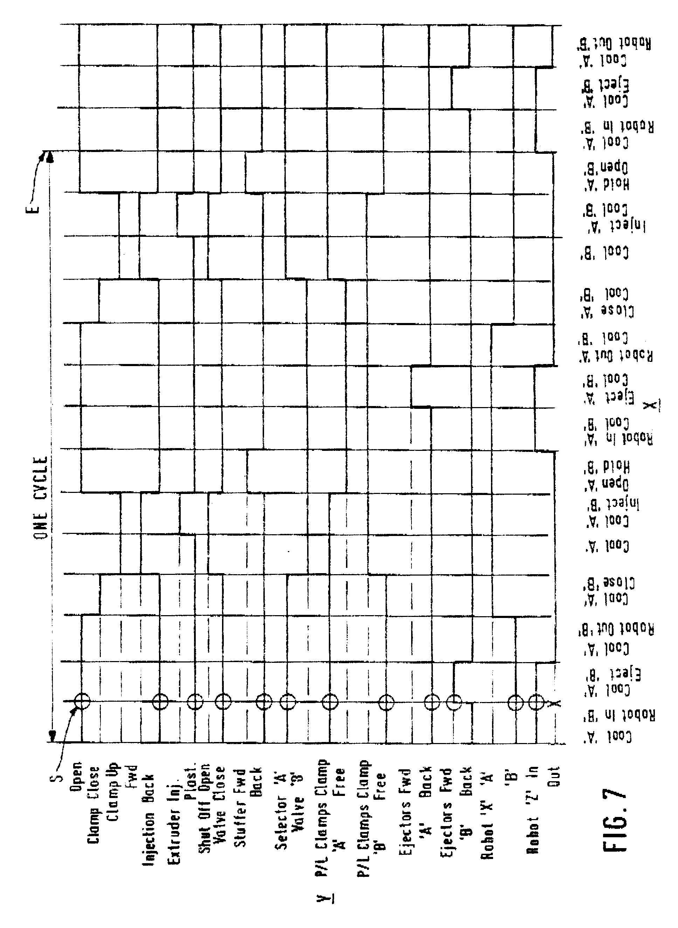

As mold halves of a given mold station approach their closed position, the lugs move into mating notches and the mating cam faces engage one another to drive the mold halves into tight face to face contact holding the mold halves sealed during cavity stuffing and subsequent cooling period independently of the primary clamp means in a manner and according to an operating sequence set forth in the cycle chart of Fig. 7.

Fig. 6 shows the part removal head 48 in place in the open mold at station B poised to retract from the mold to transfer part P out of the machine.

In this position the vacuum of the head 48 has been diverted from the right side of the head to the left side of the head as viewed in Fig. 6 to accomplish the part pick up at station B.

Referring in detail to Fig. 7, a plot showing a typical molding cycle of the machine of Figs. 1 through 6 is laid out coordinately where the y axis is a schedule of sequential positions of the various machine components or accessories for stations A and B, and the x axis is a schedule of the progress of the part through the molding steps.

The chart is read in the following fashion:
starting at the upper left hand corner at the point indicated by the letter S, one "picks up" the molding cycle by noting the small circles extending along the y axis which indicate that primary clamp 11 is open, injection section 13 is back (to the right in Fig. 4), the injection section 13 is plasticizing, shut off valve 43 is closed, secondary injection section 14 (stuffer piston 38) is retracted, selector valve 37 is open to station A, secondary clamp section 12 is clamping station A, secondary clamp 12 at station B is free (open), ejector pins 52 are retracted at station A, ejector pins 52 are forward (ejecting) at station B, robot or pick up head 48 has moved along machine x axis to station B and along the z axis into the mold at station B.

Referring to the point x at the lower left corner of the chart of Fig. 7, it is apparent when the various machine elements are in the positions just indicated by "reading" the chart a molded part is cooling in its mold at station A and the robot or pick up head 48 is positioned in the open mold at station B.

The chart is read in the manner described incrementally from left to right, the machine having produced two parts P upon arriving at end E of a complete cycle.

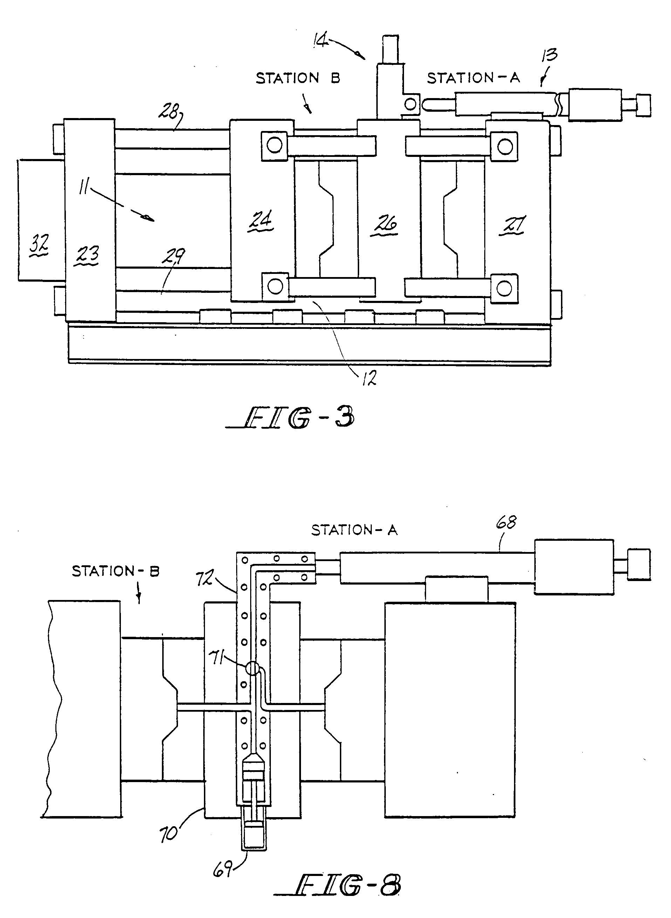

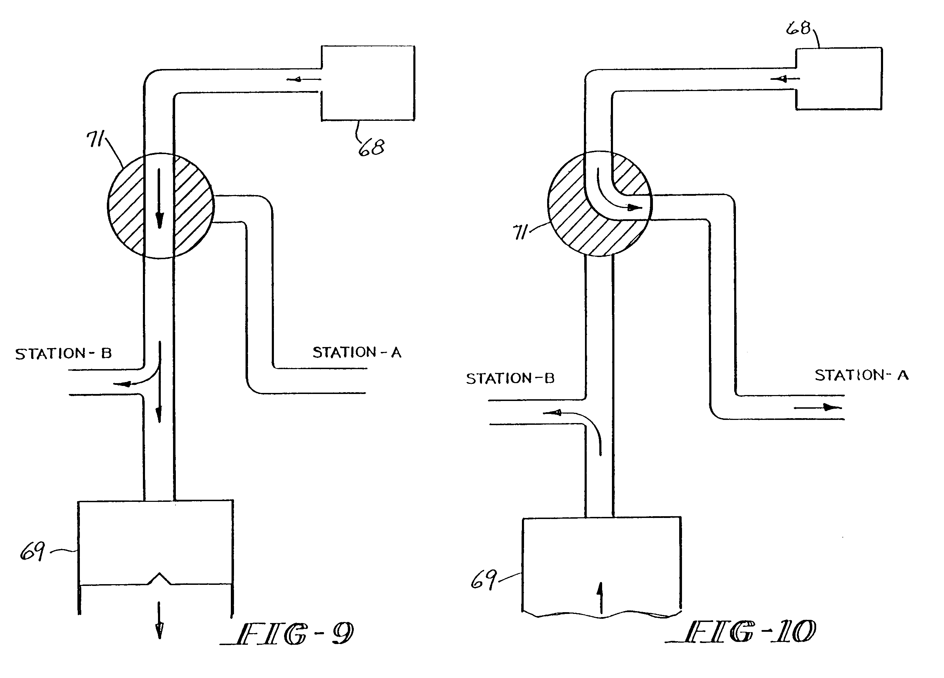

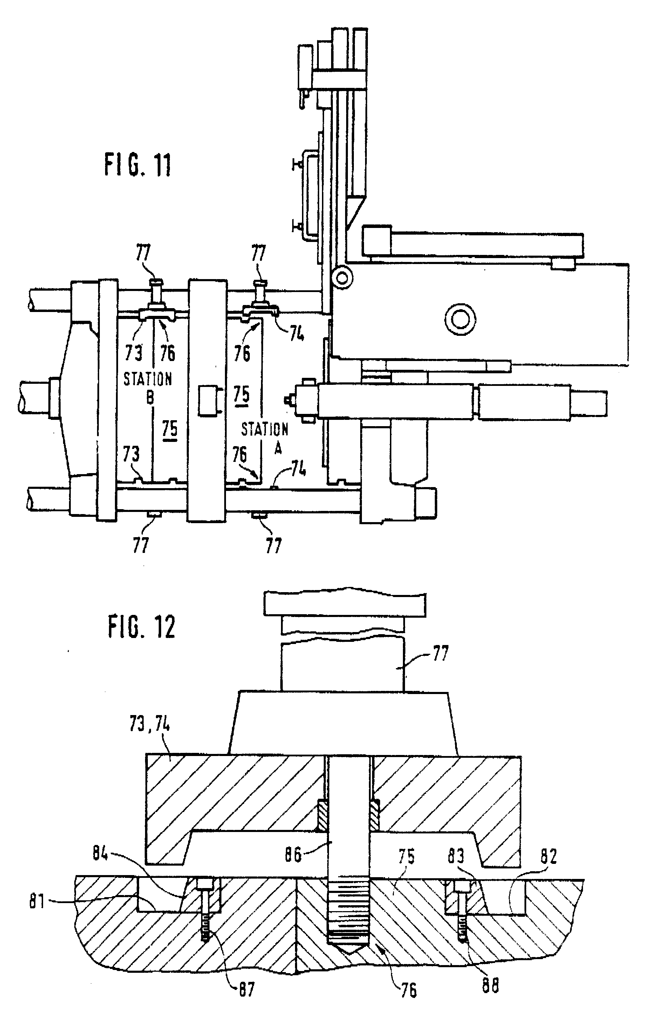

Referring now to Figs. 8, 9 and 10, an alternative embodiment of the primary and secondary injection means is disclosed schematically. In this arrangement molding stations A and B are serviced by an injection unit 68 and secondary injection unit 69. A selector valve 71, (shown as a two way valve but which may be a three way valve) disposed in distributor block 72 within platen 70, is operable to divert the flow of molten plastic from injection unit 68 to the mold at station B as indicated schematically in Fig. 9 or to the mold at station A as indicated schematically in Fig. 10. Thus, operation of the injection unit in the Fig. 9 arrangement delivers molten plastic simultaneously to the mold of station B and to the secondary injection unit 69. At the appropriate interval selector valve 71 directs the molten plastic to mold station A while injection continues into station B from the secondary injection unit. The significance of this arrangement is that (1) the primary injection unit is programmed to prepare sufficient plastic to satisfy the molds of both mold stations A and B; (2) the secondary injection unit 69 completes injection into the mold at station B after selector valve 71 shifts the flow of plastic to station A: (3) molten plastic is delivered directly to station A from the primary injection unit to complete the injection, whereby either the primary and/or secondary unit may serve as a stuffer. For example, as a variation of this embodiment one may also stuff station A with secondary injection unit 69 with appropriate valving.

Either the primary or secondary injection units may be of the reciprocating screw type or the piston type.

Injection pressure of molten plastic into a mold cavity to fill a mold cavity is frequently of a level ranging from 15,000 to 21,000 psi and injection pressure to "hold or stuff" the cavity to compensate for shrinkage is frequently of the order of 6,000 psi.

These pressure levels can be developed by primary and/or secondary injection means.

When piece parts molded at stations A and B have substantially uniform or equal cooling periods, secondary clamping means (parting line clamps) can be eliminated and the molds of station A and B are held clamped by the primary clamping unit and both molds are opened simultaneously.

In situations where the cooling periods are unequal it is necessary to use parting line clamps in addition to primary clamp.

Referring now to Figs. 11 and 12, an alternative design for a secondary clamping unit is disclosed wherein parting line clamp elements 73 and 74 are shown mounted on mold halves 75 as at 76 shown in Figs. 11 and 12. The units at station A and station B are of identical structure. Therefore, only one modified secondary clamping unit will be described.

The clamp elements 73 and 74 are operated by a piston-cylinder arrangement 77 on opposite sides of a mold station such as is shown at stations A and B in Fig. 11. Mating mold halves are formed with cut outs or recesses 81 and 82 fitted with hardened inserts 83 and 84 secured to mold halves by bolts 87 and 88. Each insert is formed with a taper mating with a corresponding taper on the complementary clamps 73-74. Actuation of the cylinder unit 77 moves the clamps on ooposite sides of the molds along a piston rod 86 (fixed to a mold half as at 76) from a retracted position of Fig. 12 to an operating position shown in Fig. 11 driving the mold halves into face to face contact under very high compressive stress.

Note that the parting line clamp structure of Figs. 11 and 12 is mounted directly on the mold halves and operates directly on the mold halves, in contrast to the secondary clamp structure described previously which is mounted on the mold platens and operates directly on the mold platens.

Obviously, any of a number of arrangements may be devised in mounting the secondary clamping arrangement on the mold halves as engineering and other design considerations dictate.

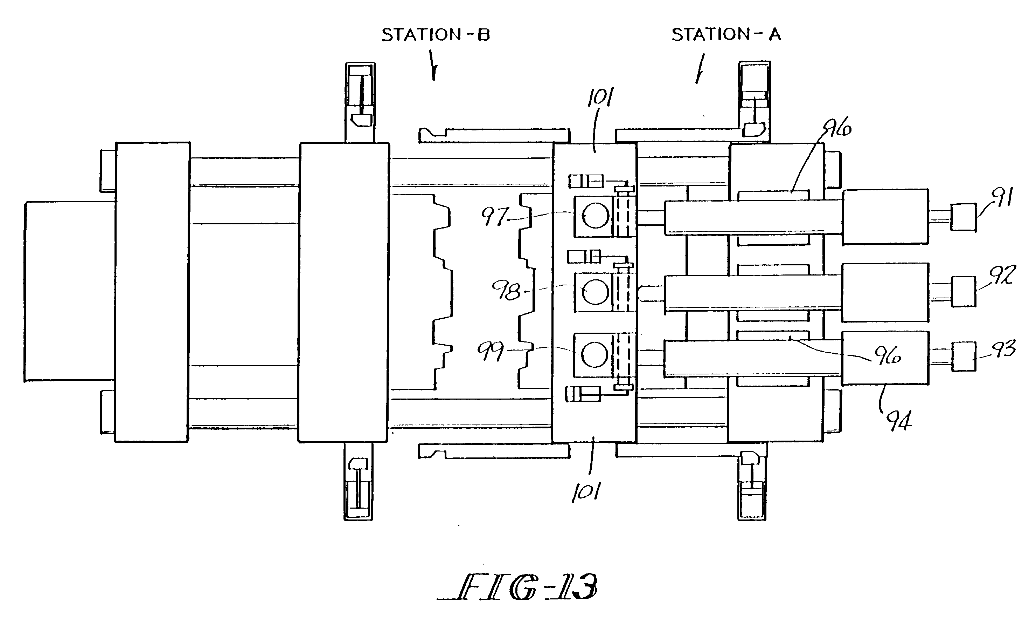

Referring to Fig. 13, a further alternative embodiment of the injection molding machine is disclosed wherein the open mold configuration at station B represents a large, complex part. In order to insure adequate filling and stuffing, a machine modification is arranged wherein a plurality of primary injection units 91, 92 and 93 are mounted on the top of fixed platen 94. Suitable tracks 96 are provided for advancing the injection units to and from to make appropriate connection with mating secondary injection units or stuffers 97, 98 and 99 incorporated in a central movable platen 101. Thus, in operation the primary injection units and cooperating stuffer units are operable individually or collectively in various combinations and permutations as design complexity of the molded parts dictate.

Obviously, the position and number of the primary injection and cooperating stuffer units is a matter of choice consistent with part retrieval, overall length of machine, floor space and so forth.

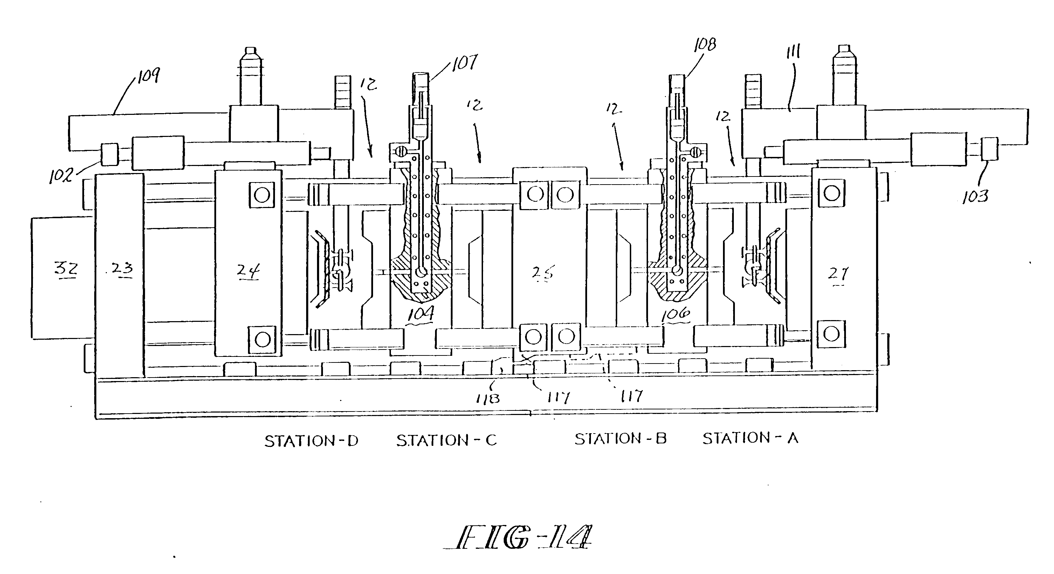

Fig. 14 illustrates a double capacity machine in which there are four molding stations A, B, C and D, two opposed primary injection extruders 102 and 103 with two central mold platens 104 and 106 each incorporating a secondary extrusion units or stuffers 107 and 108, in the fashion and for the purpose previously described, for servicing mold stations D and C on the left and mold stations B and A on the right, respectively. The reference numerals 109 and 111 designate mold part removal units or robots. Naturally, each mold station could have a plurality of molds as required.

Hereagain, the location of primary injecting units is a matter of design choice based on machine size limitations and available operating space.

The machine configuration of Fig. 14 shows the molds open at stations A and D while the molds at stations B and C are closed.

This configuration is developed in the following fashion.

Assume that the primary clamping means actuated by piston 32 has moved all movable platens 24, 104, 25 and 106 to the right against stationary platen 27 closing all molds at stations A, B, C and D with all secondary clamps 12-12 latched.

Upon an appropriate signal from the clamp control (Figure 5), the secondary clamp 12 at station A is released while the secondary clamps 12 at stations B, C and D remain latched.

The piston 32 is ordered to move to the left. This occurrence opens the mold at station A and dog 117 secured to movable platen 25 moves from the dashed line position to the solid line position to abut stop 118.

Contact between the dog 117 and stop 118 stops movable platen 106 in the position shown in Fig. 14 and blocks further separation of mold halves at station A.

Upon the occurrence of the above-noted abutment and in timed sequence, the secondary clamp at station D is unlatched so that upon continued motion of the piston 32 to the left the mold at station D opens to complete development of the mold layout shown in Fig. 14, i.e. molds at stations A and D are open and molds at stations B and C remain closed and clamped.

Again starting from a closed mold position at stations A, B, C and D, the molds at stations B and C are opened in similar fashion in response to the appropriate signals from the clamp control unit.

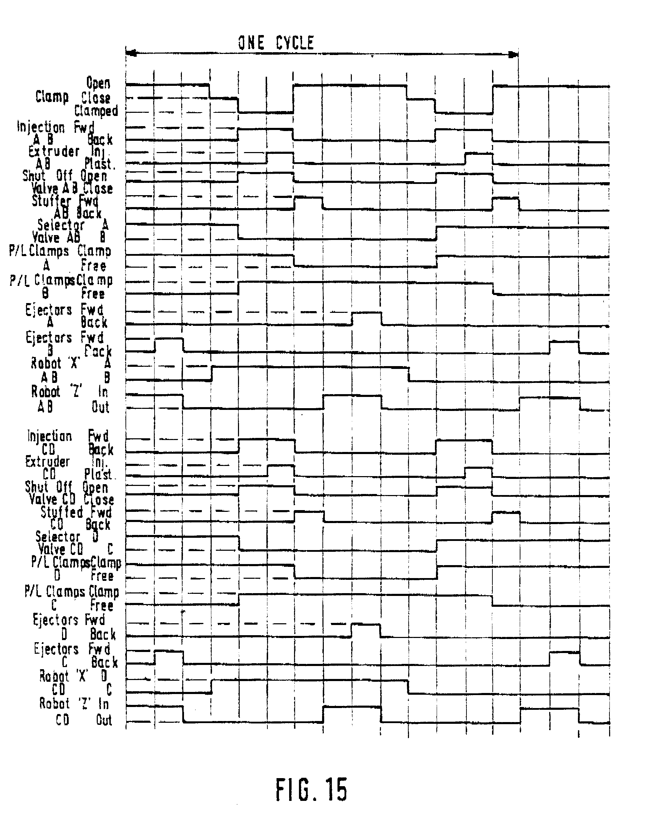

Fig. 15 is an operating schedule showing the sequential positions of the various machine accessories as the double capacity unit of Fig. 14 operates to produce four molded parts per cycle.

### DESCRIPTION OF THE ALTERNATIVE EMBODIMENT

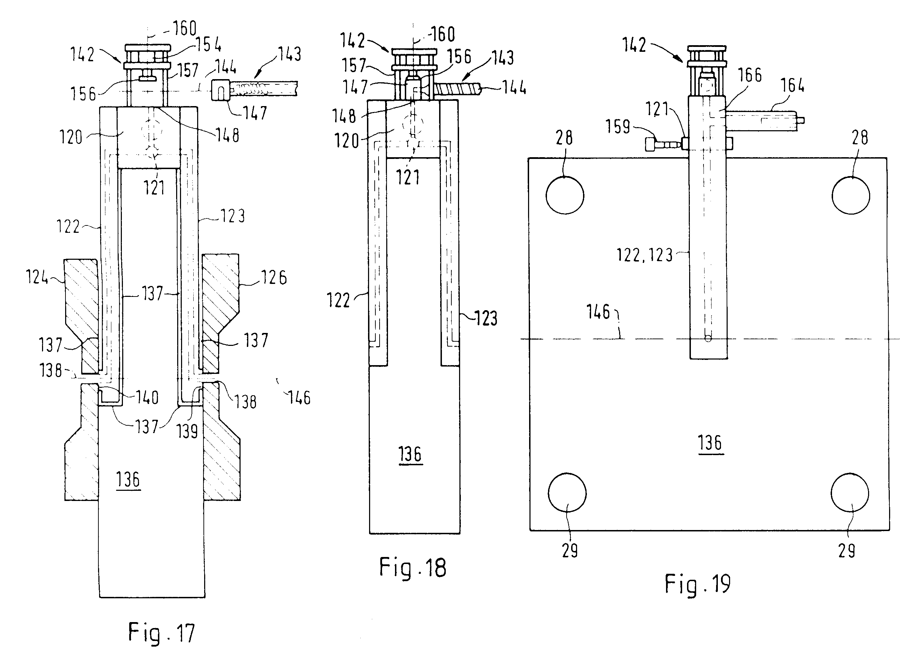

Referring now to Figs. 19-23, a modified injection molding machine includes fixed platens 23 and 27 , carried by a base frame supporting pairs of tie bars 28 and 29 in the usual and customary fashion. A movable central platen, indicated generally at 136, incorporating a hot runner system comprises a manifold distributor block 120, moldable material switching valve means 121, manifold means defining manifold sections 122 and 123, and mold halves 124 and 126 supported by said central platen 136.

Central platen 136 is movable in cooperation with movable platen 24 to open and close mold halves at mold stations indicated at A and B to mold articles, such as at G.

The clamps 128, 129, 131 and 132 operate to seal and maintain close contact between mold halves during molding in controlled sequence.

Note that manifold sections 122 and 123 straddle and are supported removably by the movable central platen 136.

Except for suitable fastening means and spacers (not shown), the manifold sections 122 and 123 are isolated from the central platen 136 by an insulating air gap indicated by the reference numeral 137 .

Frequently, it is desirable to include cooling coils in the central platen 136 to prevent overheating and attendant expansion of the platen leading to siezing to the tie rods 28 and 29.

Cooling of the central platen 136 in combination with the insulating air gap 137 protects the manifold sections 122 and 123 from overheating.

Mold halves 124 and 126 are also supported by the central platen 136 and the manifold sections 122 and 123 are sealed against respective mold halves 124 and 126 about the periphery of mold openings 138 by seal means defining a raised annulus or boss as indicated by the reference numerals 100 and 101.

Manifold distributor block 120, connected to the central platen 136, includes molding material switching valve 121 and provides support for an injection unit nozzle clamping means indicated generally by the reference numeral 142.

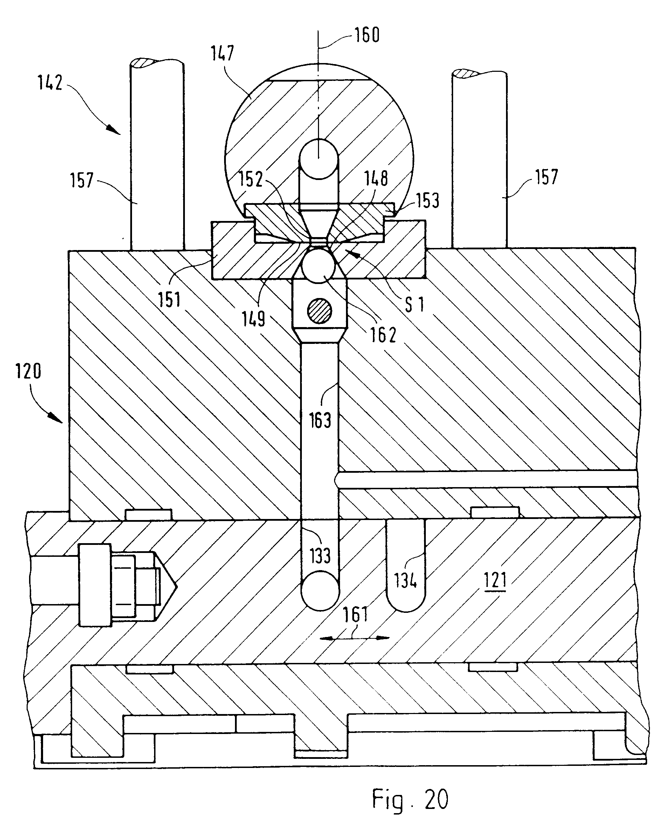

An injection unit in the form of an extruder 143, movably supported by means (not shown), is movable from the position shown in Fig. 20 to an injection position indicated in Fig. 21, along a path or axis indicated by the reference numeral 144. The axis 144 is generally parallel to the injection molding machine axis (mold clamping axis) indicated by the reference numeral 146.

When the injection unit 143 is in the injection position (Fig. 21), nozzle 147 is aligned with and communicates with orifice 148 of manifold distributor block 120.

A seal, indicated at S-1 (Fig. 23), is effected by the contact between surface 149 of manifold distributor block insert 151 and surface 152 of nozzle insert 153.

The seal is maintained by nozzle clamping means 142 defining, in this embodiment of the invention, cylinder 154 with cooperating piston 156 secured to the manifold distributor block 120 by rods 157. The nozzle clamping means acts along axis 160, which is perpendicular to machine or clamping axis 146.

Switching valve means 121, upstream of the manifold means, defining a spool valve is operated in cyclic fashion in synchronism with the molding cycle to switch moldable material to appropriate manifold section 122 and 123 via conduits 133 and 134 (Fig. 23). The spool valve 121 is reciprocated by valve operating cylinder 159 (Fig. 22), as indicated by the arrow 161 of Fig. 23.

Ball check valve 162 is provided in moldable material flow path 163 to prevent leakage when the nozzle is unclamped and the seal between the nozzle and the manifold distributor block is broken.

A stuffer or packer unit 164 is located upstream of the spool valve 121 and communicates with the flow path 163 via conduit 166.

It is anticipated that the stroke of the injection unit 143 in moving from the position of Fig. 20 to the injection position of Fig. 21 will vary from one molding set-up to another depending upon the "build up" or thickness of the mold halves.

That is, the injection position will vary along the machine axis depending upon the dimensions of the mold halves in the closed position measured along the longitudinal or clamping axis of the machine.

The stroke of the injection unit is also advantageous in that it provides access for a robot or other automatic molded article retrieval device to enter open mold halves to grasp and remove a molded article C.

It is to be understood that the invention is not limited to the illustrations described and shown herein, which are deemed to be merely illustrative of the best modes of carrying out the invention, and which are susceptible of modification of form, size, arrangement of parts and details of operation. The invention rather is intended to encompass all such modifications which are within its scope as defined by the claims.

## Claims

1. Injection molding machine for molding plastic parts (6) comprising a machine frame (31) including
at least two molding stations (A, B, C, D) formed by a plurality of separable and removal molds (16, 17) carried by a plurality of movable platens (24, 26, 70, 101, 104, 106, 136),
at least one injection means (13, 14, 68, 91, 93, 97, 98, 99, 102, 103, 107, 108, 143, 164) operative to inject molten plastic into said molds (16, 17),
molten plastic supply channels (36, 42) communicating with at least one mold (16, 17),
control means for activating said injection means (13, 14, 68, 91, 92, 93, 97, 98, 99, 102, 103, 107, 108, 143, 164) selectively and sequentially to advance molten plastic to said molds (16, 17) via said supply channels (36, 42) to selected molds (16, 17) at selected mold locations,
clamping means (11, 12) operative to close and clamp said molds (16, 17),
means to release the clamping force on said molds (16, 17) independently of each other,
means (44 to 49, 109, 111) to remove the molded parts (G),
characterized in that,
the supply channels (36, 42) are arranged in a distributor block (33, 72, 120) which is removably inserted in a discrete, movable center platen (26, 70, 101, 104, 106, 136) between said two molds (16, 17) carrying a mold half (19, 21, 124, 126) on each side and a primary and secondary injection means (13, 14; 68, 69; 91, 92, 93, 97, 98, 99,; 102, 103, 107, 108; 143, 164) are provided wherein said secondary injection means (14, 69, 97, 98, 99, 107, 108, 164) is operative to stuff at least one mold (16, 17).

2. Machine of claim 1, characterized in that the primary injection means is a movable extruder and the secondary injection means is a stuffer mechanism fixed to the distributor block (33, 72, 120)

3. Machine of claims 1 or 2, characterized in that a plurality of valve means (37, 43, 71, 121) are provided in said distributor block (33, 72, 120),
a first valve means (37, 71, 121) operable to switch molten plastic flow from the first mold (16) to a second mold (17) selectively, and
a second valve means (43) operable to control molten plastic flow from one of said injection means (13, 14, 68, 69, 91, 92, 93, 97, 98, 99; 102, 103, 107, 108; 143, 164), selectively, to insure introduction and maintenance of adequate molten plastic in each said mold (16, 17) in cyclic fashion.

4. Machine of one of claims 1 to 3, characterized in that the central platen (136) is supported by tie rods (28, 29) and movable to and fro along said rods (28, 29) to define a first axis (146), the central platen (136) includes a hot runner system operable to connect with the injection unit (143) which is clamped to said hot runner system,
said hot runner system includes the distributor block (120) communicating with a manifold means,
said manifold means is supported by and disposed on the exterior of said central platen (136) and defines two separate, independent manifold section (122, 123) straddling said central platen (136).

5. Machine of claim 4 characterized by valve means (121) in said distributor block (120) upstream of said manifold means for directing moldable material to said manifold sections (122, 123) selectively.

6. Machine of claim 4 or 5 characterized by cooperating seal means (S-1) on said hot runner system and on said injection means (143) to effect a seal between the hot runner system and the injection means (143), power means (142) effecting a clamping action along a second axis (160), which is generally perpendicular to said first axis (146).

7. Machine of one of claims 4 to 6 characterized in that the injection means (143) includes a nozzle (147) and the hot runner system has a mating orifice (148) and the power means operates to clamp the nozzle (147) to the orifice (148) releasably along a second axis (160), which is generally perpendicular to the first axis (146).

8. Machine of at least one of claims 4 to 7, characterized in that the injection means (143) includes an extruder which advances moldable material along a path (144) parallel to said first axis (146) and said nozzle (147) advances said material along a path which is parallel to said second axis (160).

9. Machine of at least one of claims 4 to 8, characterized in that the central platen (136) supports removable mold halves (124, 126) each communicating with an adjacent manifold section (122, 123), said mold halves (124, 126) being interchangeable to accommodate the shape and size of articles (G) to be molded whereby said central platen (136) remains a machine ficture.

10. Machine of at least one of claims 4 to 9, characterized in that the injection means (143) is movable through a definite stroke along a path (144) parallel to said first axis (146) from a first position in which the means (143) is free of said hot runner system to a second position in which the means (143) is aligned with said hot runner system, said power means (142) being operable along a second axis (160) to clamp and seal the injection means (143) to said hot runner system, said first and second axes (146, 160) being generally perpendicular.

11. Machine of at least one of claims 4 to 10, characterized in that the hot runner system includes a check valve (162) to preclude leakage of molding material from said hot runner system when said injection means (143) is not in the sealing mode.

12. Machine of at least one of claims 4 to 11 characterized in that said stuffer or packer means (164) is connected to said distributor block (120) and said valve means (121) is operable, selectively, to connect the injection means (143) with said packer means (164), exclusively.

13. Machine of at least one of claims 4 to 12 in which the distributor block (120) and each manifold section (122, 123) respectively is isolated substantially from said central platen (136) by an insulating air gap (137).

14. Machine of at least one of claims 4 to 13, characterized in that said central platen (136) supports a mold packer means operable to communicate with said hot runner system to supply moldable material independently of said injection means.

15. Process for molding plastic parts utilizing an injection molding machine of at least one of claims 1 til 14, characterized by
- closing and clamping said molds (16, 17),
- injecting molten plastic into said first clamped mold (16) to fill said mold,
- maintaining pressure at the first mold (16) after filling and during cooling by utilizing pressure of said primary injection means (13, 68, 91, 92, 93, 102, 103, 143),
- injecting molten plastic into said second clamped mold (17) to fill said mold,
- maintaining pressure at the second mold (17) after filling and during cooling by utilizing the pressure of the secondary injection means (14, 69, 97, 98, 99, 107, 108, 164)
- cooling the molten plastic in both said molds (16, 17), unclamping and opening said molds and
- removing molded parts (G).

## Patentansprüche

1. Spritzgiessmaschine zum Formen von Kunststoffteilen (6) mit einem Maschinenrahmen (31), welcher wenigstens zwei Formstationen (A, B, C, D), die von einer Vielzahl von trennbaren und abnehmbaren Formen (16, 17) gebildet sind, die von einer Mehrzahl von bewegbaren Platten (24, 26, 70, 101, 104, 106, 136) gehalten werden, wenigstens eine Einspritzeinrichtung (13, 14, 68, 91, 93, 97, 98, 99, 102, 103, 107, 108, 143, 164) zum Einspritzen von aufgeschmolzenem Kunststoff in die Formen (16, 17), Zuführkanäle (36, 42) für aufgeschmolzenen Kunststoff, welche mit wenigstens einer Form (16, 17) in Verbindung stehen, eine Steuereinrichtung zum Aktivieren der Einspritzeinrichtung (13, 14, 68, 91, 92, 93, 97, 98, 99, 102, 103, 107, 108, 143, 164) wahlweise und der Reihe nach, um aufgeschmolzenen Kunststoff in die Formen (16, 17) über die Zuführkanäle (36, 42) zu ausgewählten Formen (16, 17), in ausgewählten Formstationen zu befördern, Spanneinrichtungen (11, 12) zum Schliessen und Verspannen der Formen (16, 17) Einrichtungen zum Aufheben des Schliessdruckes an den Formen (16, 17) unabhängig voneinander und Einrichtungen (44 - 49, 109, 111) zum Entnehmen der Spritzteile (G) aufweist,
dadurch gekennzeichnet,
dass der Zuführkanal (36, 42) einem Verteilerblock (33, 72, 120) zugeordnet ist, welcher wieder entfernbar in einer getrennten bewegbaren Mittelplatte (26, 70, 101, 104, 106, 136) zwischen zwei Formen (16, 17) eingesetzt ist, die eine Formhälfte (19, 21, 124, 126) auf jeder Seite trägt, und eine erste und zweite Einspritzeinrichtung (13, 14; 68, 69; 91, 92, 97, 98, 99; 102, 103, 107, 108; 143, 164) vorgesehen ist, wobei die zweite Einspritzeinrichtung (14, 69, 97, 98, 99, 107, 108, 164) dazu dient, um wenigstens eine Form (16, 17) nachzufüllen.

2. Maschine nach Anspruch 1, dadurch gekennzeichnet, dass die erste Einspritzeinrichtung als ein bewegbarer Extruder und die zweite Einspritzeinrichtung als ein Nachfüllmechanismus ausgebildet ist, der an dem Verteilerblock (33, 72, 120) festlegbar ist.

3. Maschine nach Anspruch 1 oder 2, dadurch gekennzeichnet, dass eine Mehrzahl von Ventileinrichtungen (27, 43, 71, 121) in dem Verteilerblock (33, 72, 120) vorgesehen sind, wobei eine erste Ventileinrichtung (37, 71, 121) zum Umleiten des aufgeschmolzenen Kunststoffflusses von der ersten Form (16) zu der zweiten Form (17) wahlweise umschaltbar ist, und eine zweite Ventileinrichtung dazu geeignet ist, um einen aufgeschmolzenen Kunststoffflusses der einen Einspritzeinrichtung (13, 14, 68, 69, 91, 92, 93, 97, 98, 99; 102, 103, 107, 108; 143, 164) wahlweise zu steuern, um die Einleitung und Zuführung von angemessenem aufgeschmolzenem Kunststoff in jede Form (16, 17) zyklisch zu gewährleisten.

4. Maschine nach einem der Ansprüche 1 bis 3, dadurch gekennzeichnet, dass die Mittelplatte (136) durch Führungsstangen (28, 29) getragen und bewegbar hin und her entlang den Stangen (28, 29) in einer ersten Achse (146) ist, wobei die Mittelplatte (136) ein Heisskanalsystem aufweist, das mit der Einspritzeinheit (143) verbunden werden kann, die mit dem Heisskanalsystem verspannt ist, wobei dem Heisskanalsystem der Verteilerblock (120) zugeordnet ist, der mit einem Verteilerelement in Verbindung steht, wobei das Verteilerelement auf der Aussenseite der Mittelplatte (136) angeordnet ist und zwei einzelne, unabhängige Verteilerabschnitte (122, 123) bildet, die der Mittelplatte (136) aufsitzen.

5. Maschine nach Anspruch 4, dadurch gekennzeichnet, dass eine Ventileinrichtung (121) in dem Verteilerblock (120) oberhalb der Verteilerelemente angeordnet ist, um wahlweise vergiessbares Material zu den Verteilerabschnitten (122, 123) umzuleiten.

6. Maschine nach Anspruch 4 oder 5, gekennzeichnet durch zusammenwirkende Dichtungselemente (S-1) auf dem Heisskanalsystem und auf den Einspritzeeinrichtungen (143), um ein Abdichten zwischen dem Heisskanalsystem und den Einspritzeinrichtungen (143) zu bewirken, und einer Antriebseinrichtung (142), welche eine Spannbewegung entlang einer zweiten Achse (160) bewirkt, die im wesentlichen senkrecht zur ersten Achse (146) verläuft.

7. Maschine nach einem der Ansprüche 4 bis 6, dadurch gekennzeichnet, dass die Einspritzeinrichtung (143) eine Düse (147) aufweist und das Heisskanalsystem eine passende Öffnung (148) hat und die Antriebseinrichtung geeignet ist, die Düse (147) auf die Öffnung (148) entlang einer zweiten Achse (160) lösbar aufzudrücken, die im wesentlichen senkrecht zu der ersten Achse (146) verläuft.

8. Maschine nach wenigstens einem der Ansprüche 4 bis 7, dadurch gekennzeichnet, dass die Einspritzeinrichtung (143) einen Extruder beinhaltet, der verformbares Material entlang einem Kanal (144) parallel zu der ersten Achse (146) befördert, und die Düse (147) das Material entlang einem Kanal weiterbefördert, der zu der zweiten Achse (160) parallel verläuft.

9. Maschine nach wenigstens einem der Ansprüche 4 bis 8, dadurch gekennzeichent, dass die Mittelplatte (136) abnehmbare Formhälften (124, 126) trägt, die jeweils mit einem benachbarten Verteilerabschnitt (122, 123) in Verbindung stehen, wobei die Formhälften (124, 126) austauschbar sind, um auf die Form und Grösse der Gegenstände (G), die geformt werden sollen, angepasst zu werden, wobei die Mittelplatte (136) ein Bestandteil der Maschine bleibt.

10. Maschine nach wenigstens einem der Ansprüche 4 bis 9, dadurch gekennzeichnet, dass die Einspritzeinrichtung (143) durch einen bestimmten Hub entlang eines Kanals (144) parallel zu der ersten Achse (146) von einer ersten Position, in der die Einrichtung (143) gelöst von dem Heisskanalsystem ist, zu einer zweiten Position, in der die Einrichtung (143) mit dem Heisskanalsystem übereinstimmt, bewegbar ist, wobei die Antriebseinrichtung (142) entlang einer zweiten Achse (160) bewegbar ist, um die Einspritzeinrichtung (143) gegenüber dem Heisskanalsystem zu verspannen und abzudichten, wobei die erste und zweite Achse (146, 160) im wesentlichen senkrecht zueinander verlaufen.

11. Maschine nach wenigstens einem der Ansprüche 4 bis 10, dadurch gekennzeichnet, dass das Heisskanalsystem ein Kontrollventil (162) beinhaltet, um ein Nachtropfen von vergiessbarem Material aus dem Heisskanalsystem zu verhindern, wenn sich die Einspritzeinrichtung (143) nicht in der abgedichteten Lage befindet.

12. Maschine nach wenigstens einem der Ansprüche 4 bis 11, dadurch gekennzeichnet, dass eine Stopf- oder Nachfülleinrichtung (164) mit dem Verteilerblock (120) verbunden ist und die Ventileinrichtung (121) in der Lage ist, wahlweise die Einspritzeinrichtung (143) ausschliesslich mit der Nachfülleinrichtung (144) zu verbinden.

13. Maschine nach wenigstens einem der Ansprüche 4 bis 12, dadurch gekennzeichnet, dass der Verteilerblock (120) bzw. jeder Verteilerabschnitt (122, 123) im wesentlichen durch einen isolierenden Luftspalt (137) von der Mittelplatte (136) isoliert ist.

14. Maschine nach wenigstens einem der Ansprüche 4 bis 13, dadurch gekennzeichnet, dass die Mittelplatte (136) eine Formnachfülleinrichtung trägt, welche in der Lage ist, mit dem Heisskanalsystem zu kommunizieren, um verformbares Material unabhängig von der Einspritzeinrichtung zuzuführen.

15. Verfahren zum Formen von Kunststoffteilen durch eine Spritzgiessmaschine nach wenigstens einem der Ansprüche 1 bis 14, dadurch gekennzeichnet, dass
- die Formen (16, 17) geschlossen und verspannt werden,
- aufgeschmolzener Kunststoff in die erste Form (16) eingespritzt wird, um die Form zu füllen,
- ein Druck in der ersten Form (16) nach dem Befüllen und während des Kühlens durch Druck der ersten Einspritzeinrichtung (13, 68, 91, 92, 93, 102, 103, 143) aufrecht erhalten wird,
- aufgeschmolzener Kunststoff in die zweite verspannte Form (17) eingespritzt wird, um die Form zu befüllen,
- ein Druck in der zweiten Form (17) nach dem Befüllen und während des Kühlens durch Druck der zweiten Einspritzeinrichtung (14, 69, 97, 98, 99, 102, 108, 164) aufrecht erhalten wird,
- der geschmolzene Kunststoff in beiden Formen (16, 17) gekühlt, die Formen gelöst und geöffnet werden und
- die Spritzteile (G) entnommen werden.

## Revendications

1. Machine à mouler par injection destinée à mouler des pièces en matière plastique (6), comportant un châssis de machine (31) comprenant :
au moins deux postes de moulage (A, B, C, D) formés par une pluralité de moules séparables et amovibles (16, 17) portés par une pluralité de platines mobiles (24, 26, 70, 101, 104, 106, 136),
au moins un moyen d'injection (13, 14, 68, 91, 93, 97, 98, 99, 102, 103, 107, 108, 143, 164) servant à injecter de la matière plastique fondue dans les moules (16, 17),
des conduits d'alimentation en matière plastique fondue (36, 42) communiquant avec au moins un moule (16, 17),
des moyens de commande pour actionner sélectivement et séquentiellement les moyens d'injection (13, 14, 68, 91, 92, 93, 97, 98, 99, 102, 103, 107, 108, 143, 164) de manière à faire avancer la matière plastique fondue vers les moules (16,17) par l'intermédiaire des conduits d'alimentation (36, 42), vers des moules sélectionnés (16, 17) à des emplacements de moule sélectionnés
des moyens de blocage (11, 12) servant à fermer et à bloquer les moules (16, 17),
des moyens pour supprimer la force de blocage appliquée aux moules (16, 17) indépendamment les uns de autres, et
des moyens (44 à 49, 109, 111) pour retirer les pièces moulées (G),
caractérisée en ce que,
les conduits d'alimentation (36, 42) sont disposés dans un bloc distributeur (33, 72, 120) qui est introduit de manière amovible dans une platine centrale mobile séparée (26, 70, 101, 104, 106, 136) entre les deux moules (16, 17) portant une moitié de moule (19, 21, 124, 126) de chaque côté, et en ce qu'on utilise des moyens d'injection primaire et secondaire (13, 14 ; 68, 69 ; 91, 92, 93, 97, 98, 99 ; 102, 103, 107, 108 ; 143, 164) dans lesquels le moyen d'injection secondaire (14, 69, 97, 98, 99, 107, 108, 164) sert à remplir complètement au moins un moule (16, 17).

2. Machine selon la revendication 1, caractérisée en ce que le moyen d'injection primaire est une extrudeuse mobile et le moyen d'injection secondaire est un mécanisme de remplissage fixé au bloc de distributeur (33, 72, 120).

3. Machine selon les revendications 1 ou 2, caractérisée en ce qu'une pluralité de moyens de soupape (37, 43, 71, 121) sont utilisés dans le bloc distributeur (33, 72, 120),
un premier moyen de soupape (37, 71, 121) servant à commander sélectivement le débit de matière plastique fondue du premier moule (16) vers un second moule (17), et
un second moyen de soupape (43) servant à commuter sélectivement le débit de matière plastique fondue de l'un des moyens d'injection (13, 14, 68, 69, 91, 92, 93, 97, 98, 99 ; 102, 103, 107, 108 ; 143, 164) pour assurer de manière cyclique l'introduction et le maintien d'une quantité de matière plastique adéquate dans chaque moule (16, 17).

4. Machine selon l'une des revendications 1 à 3, caractérisée en ce que la platine centrale (136) est supportée par des tiges de liaison (28, 29) et peut aller et venir le long de ces tiges (28, 29) pour définir un premier axe (146), et la platine centrale (136) comprend un système de coulée à chaud manoeuvrable pour se relier au bloc d'injection (143) qui est bloqué sur ce système de coulée à chaud,
le système de coulée à chaud comprend le bloc de distributeur (120) communiquant avec un moyen de tubulure,
le moyen de tubulure est monté sur l'extérieur de la platine centrale (136) en étant supporté par celle-ci, et définit deux sections de tubulure indépendantes séparées (122, 123) enjambant la platine centrale (136).

5. Machine selon la revendication 4, caractérisée par un moyen de soupape (121) monté dans le bloc distributeur (120) en amont du moyen de tubulure pour diriger sélectivement le matériau moulable vers les sections de tubulure (122, 123).

6. Machine selon la revendication 4 ou 5, caractérisée par des moyens d'étanchéité (S-1) montés en coopération sur le système de coulée à chaud et sur le moyen d'injection (143) pour former un joint d'étanchéité entre le système de coulée à chaud et le moyen d'injection (143), des moyens d'assistance à moteur (142) effectuant une action de blocage le long d'un second axe (160) généralement perpendiculaire au premier axe (146).

7. Machine selon l'une des revendications 4 à 6, caractérisée en ce que le moyen d'injection (143) comprend une buse (147), en ce que le système de coulée à chaud comporte un orifice de raccordement (148), et en ce que le moyen d'assistance à moteur fonctionne pour bloquer la buse (147) sur l'orifice (148), de manière amovible, le long d'un second axe (160) généralement perpendiculaire au premier axe (146).

8. Machine selon l'une au moins des revendications 4 à 7, caractérisée en ce que le moyen d'injection (143) comprend une extrudeuse qui fait avancer le matériau moulable le long d'un chemin (144) parallèle au premier axe (146), et en ce que la buse (147) fait avancer le matériau le long d'un chemin parallèle au second axe (160).

9. Machine selon l'une au moins des revendications 4 à 8, caractérisée en ce que la platine centrale (136) supporte des moitiés de moule amovibles (124, 126) communiquant chacune avec une section de tubulure adjacente (122, 123), ces moitiés de moule (124, 126) étant interchangeables pour s'adapter à la forme et à la taille des articles (G) à mouler, de sorte que la platine centrale (136) reste une pièce fixe de la machine.

10. Machine selon l'une au moins des revendications 4 à 9, caractérisée en ce que le moyen d'injection (143) peut se déplacer sur une course bien définie le long d'un chemin (144) parallèle au premier axe (146), pour passer d'une première position dans laquelle le moyen (143) est dégagé du système de coulée à chaud, à une seconde position dans laquelle le moyen (143) est aligné avec le système de coulée à chaud, le moyen d'assistance à moteur (142) étant actionnable le long d'un second axe (160) pour bloquer et sceller le moyen d'injection (143) sur le système de coulée à chaud, le premier axe et le second axe (146, 160) étant généralement perpendiculaires.

11. Machine selon l'une au moins des revendications 4 à 10, caractérisée en ce que le système de coulée à chaud comprend un clapet de retenue (162) pour éviter une fuite du matériau de moulage hors du système de coulée à chaud lorsque le moyen d'injection (143) ne se trouve pas dans le mode d'étanchéité.

12. Machine selon l'une au moins des revendications 4 à 11, caractérisée en ce que le moyen de remplissage ou de bourrage (164) est relié au bloc distributeur (120), et en ce que le moyen de soupape (121) est actionnable sélectivement pour relier le moyen d'injection (143) exclusivement au moyen de bourrage (164).

13. Machine selon l'une au moins des revendications 4 à 12, caractérisée en ce que le bloc de distributeur (120) et chaque section de tubulure (122, 123) respective, sont complètement isolés de la platine centrale (136) par un intervalle d'air d'isolation (137).

14. Machine selon l'une au moins des revendications 4 à 13, caractérisée en ce que la platine centrale (136) supporte un moyen de bourrage de moule actionnable pour assurer la communication avec le système de coulée à chaud, de manière à fournir du matériau moulable indépendamment des moyens d'injection.

15. Procédé pour mouler des pièces en matière plastique en utilisant une machine à mouler par injection selon l'une au moins des revendications 1 à 14, procédé caractérisé en ce qu'il consiste à :
- fermer et bloquer les moules (16, 17),
- injecter de la matière plastique fondue dans le premier moule bloqué (16) pour remplir ce moule,
- maintenir la pression dans le premier moule (16) après le remplissage et pendant le refroidissement, en utilisant la pression du moyen d'injection primaire (13, 68, 91, 92, 93, 102, 103, 143),
- injecter de la matière plastique fondue dans le second moule bloqué (17) pour remplir ce moule,
- maintenir la pression dans le second moule (17) après le remplissage et pendant le refroidissement, en utilisant la pression du moyen d'injection secondaire (14, 69, 97, 98, 99, 107, 108, 164),
- refroidir la matière plastique fondue dans les deux moules (16, 17), débloquer et ouvrir les moules, et
- retirer les pièces moulées (G).
